# EUROPÄISCHE PATENTSCHRIFT

(11) **EP 2 396 350 B1**
(45) Veröffentlichungstag und Bekanntmachung des Hinweises auf die Patenterteilung: **12.03.2014**
(21) Anmeldenummer: 10701137.1
(22) Anmeldetag: 21.01.2010
(51) Int. Cl.: C08F 220/18, C08F 6/00, C08F 2/01, C08F 2/02, C08F 20/10, C08J 3/12, C09D 133/06, C09J 133/06, C08L 33/10, C08L 33/08, C08F 220/14

(54) **VERFAHREN ZUR SYNTHESE VON VERBESSERTEN BINDEMITTELN MIT DEFINIERTER KORNGRÖSSENVERTEILUNG**
METHOD FOR SYNTHESIZING IMPROVED BINDERS HAVING A DEFINED GRAIN SIZE DISTRIBUTION
PROCÉDÉ DE SYNTHÈSE DE LIANTS AMÉLIORÉS PRÉSENTANT UNE DISTRIBUTION GRANULOMÉTRIQUE DÉFINIE

(30) Priorität: 12.02.2009 DE 102009000814
(43) Veröffentlichungstag der Anmeldung: 21.12.2011
(73) Patentinhaber: Evonik Röhm GmbH, 64293 Darmstadt (DE)
(72) Erfinder: SCHWIND, Helmut, 63457 Hanau (DE); WIESLER, Uwe-Martin, 64291 Darmstadt (DE); BORGMANN, Cornelia, Chatham, NJ 07928 (US); SCHMIED, Thomas, 64750 Lützelbach (DE); MAUS, Stefanie, 60314 Frankfurt (DE); BALK, Sven, 60594 Frankfurt (DE)
(86) Internationale Anmeldenummer: PCT/EP2010/050655
(87) Internationale Veröffentlichungsnummer: WO 2010/091919

(56) Entgegenhaltungen:
- WO-A1-2009/121640
- GB-A- 1 524 433
- GB-A- 2 284 425
- US-A- 5 574 117
- US-A- 6 160 059

## Beschreibung

### Gebiet der Erfindung

Die Erfindung betrifft ein Verfahren zur Herstellung von Polymerisaten für Lackanwendungen durch Polymerisation von Estern der Acrylsäure oder der Methacrylsäure oder von Vinylaromaten oder von anderen radikalisch polymerisierbaren Vinylverbindungen oder von Monomergemischen, die überwiegend aus solchen Monomeren bestehen, mittels eines kontinuierlichen Polymerisationsverfahrens. Insbesondere betrifft die Erfindung ein lösungsmittelfreies, kontinuierliches Herstellungsverfahren von Polymerisaten, durch das Bindemittel für Lackanwendungen mit einstellbarer Granulatgröße hergestellt werden können. Die erfindungsgemäß hergestellten Polymergranulate zeichnen sich durch eine verbesserte Verarbeitbarkeit ohne Fein- und Grobanteile aus.

### Stand der Technik

(Meth)Acrylat- oder Vinylaromat-Bindemittel für Lackanwendungen werden nach Stand der Technik in der Regel mittels Suspensionspolymerisation oder Lösungspolymerisation hergestellt. Unter (Meth)Acrylaten werden sowohl Acrylsäure und ihre Derivate, beispielsweise ihre Ester, als auch Methacrylsäure und ihre Derivate, beispielsweise ihre Ester und Mischungen aus den vorgenannten Komponenten verstanden.
Die vorliegende Erfindung beschreibt dagegen ein kontinuierliches Substanzpolymerisationsverfahren. Ein solches Verfahren kann ohne störende Lösungsmittel durchgeführt werden. Lösungsmittel können während einer Polymerisation z.B. von (Meth)Acrylaten Nebenreaktionen wie Kettenübertragungsreaktionen, ungewünschte Abbruchreaktionen oder sogar polymeranaloge Umsetzungen bewirken. Zusätzlich stellt die Handhabung von Lösungsmitteln unter Produktionsbedingungen ein Sicherheitsrisiko dar. Weiterhin kann die Wahl des Lösungsmittels auch durch den Produktionsprozess - z.B. durch die benötigte Reaktionstemperatur - eingeschränkt sein. Dies wiederum beeinträchtigt die spätere Formulierung und die Applikationsform z.B. in Hinblick auf zu lange Trocknungszeiten durch ein zu hoch siedendes Lösungsmittel.
Eine alternative Entfernung des zur Produktion verwendeten Lösungsmittels macht einen zusätzlichen, unerwünschten Produktionsschritt nötig und belastet durch die Verwendung zweier verschiedener Lösungsmittel für Herstellung und Anwendung zusätzlich die Umwelt. Außerdem stören Lösungsmittelreste im Produkt bei der Granulation, der Extrusion, der Formulierung und der Verarbeitung des Bindemittels. In Lackanwendungen können diese zusätzlichen Lösungsmittelbestandteile des weiteren die Qualität der Beschichtung z.B. in Bezug auf Glanz, Pigmentierung oder Wetterstabilität stören.

Die Suspensionspolymerisation von Estern der Acrylsäure oder der Methacrylsäure oder von Vinylaromaten oder von Monomergemischen, die überwiegend aus solchen Monomeren bestehen, ist grundsätzlich bekannt. Auch dieses Verfahren wird lösungsmittelfrei durchgeführt. Gegenüber der Substanzpolymerisation hat man jedoch den großen Nachteil, dass in diesem Verfahren eine große Menge Wasser eingesetzt wird. Dies macht zusätzliche Prozessschritte wie eine Filtration und eine anschließende Trocknung nötig. Diese Trocknung erfolgt meist nur unvollständig. Schon geringe Restwassergehalte führen jedoch in Lackanwendungen zu einer deutlichen Beeinträchtigung der optischen Eigenschaften wie zum Beispiel Glanz oder der Pigmentdispergierung.
Auch kann eine Suspensionspolymerisation nicht kontinuierlich, sondern nur im Batch-Betrieb durchgeführt werden. Ein solches Verfahren ist gegenüber einer kontinuierlichen Polymerisation weniger flexibel und effizient durchzuführen.
Ein weiterer Nachteil der Suspensionspolymerisation gegenüber anderen Polymerisationsverfahren ist die große Zahl an Hilfsstoffen wie Verteilern, Emulgatoren, Antischäumungsmitteln oder anderen Hilfsstoffen, die eingesetzt werden müssen und auch nach der Aufarbeitung noch im Endprodukt enthalten sind. Als Verunreinigung können diese Hilfsstoffe in einem Lack zum Beispiel zu verringerten Glanzwerten, einer verschlechterten Dispergierung von Pigmenten oder zu Stippen durch unzureichend ausgewaschenen, in organischen Lösemitteln unlöslichen Verteilern führen.
Auch von Nachteil ist die nur sehr eingeschränkte Copolymerisierbarkeit von polaren Comonomeren wie (Meth)Acrylsäuren, aminofunktionellen oder hydroxyfunktionellen (Meth)Acrylaten. Der Anteil dieser Monomeren am jeweiligen Monomergemisch muss wegen ihrer Wasserlöslichkeit stark begrenzt werden.
Ein weiterer großer Nachteil der Suspensionspolymerisation ist die benötigte Reaktionstemperatur. Ein solches Verfahren ist in einem nur sehr geringen Temperaturfenster durchführbar. Temperaturen oberhalb von 100 °C sind aufgrund des verwendeten Wassers grundsätzlich nur schlecht einstellbar. Eine theoretische Durchführung unter Druck und Temperaturen oberhalb von 100 °C ist durch die unter solchen Bedingungen zusätzlich verbesserten Löslichkeit der Monomere in der Wasserphase nicht empfehlenswert. Bei zu niedrigen Temperaturen dagegen verläuft die Suspensionspolymerisation nur sehr langsam bzw. unvollständig ab und die Einstellung einer prozesskompatiblen Partikelgröße gestaltet sich äußerst schwierig. Ein Beispiel zur Herstellung von Suspensionspolymerisaten als Bindemittel für Lackanwendungen findet sich in EP 0 190 433.
Ein weiterer Nachteil der Suspensionspolymerisation gegenüber der vorliegenden Erfindung ist die Partikelgröße der Produkte. Dem Fachmann ist bekannt, dass Suspensionspolymerisate in einem Partikelgrößenbereich von wenigen Mikrometern bis zu maximal einem Zentimeter anfallen. Selbst große Polymerperlen weisen jedoch zusätzlich einen großen Anteil feiner Partikel auf. Dieser Feinanteil führt zu einigen Nachteilen eines solchen Materials. Zum einen führen diese Produktanteile zu Problemen bei der Reinigung, Trocknung und Verpackung des Materials, bis hin zur Gefahr einer Feinstaubexplosion. Zum anderen können Produkte mit einem relevanten Feinanteil nicht in einem Extrusionsprozess eingesetzt werden. Die meisten Extruder benötigen zum Einziehen der Rohstoffe eine dazu optimale Partikelmindestgröße.
Ein Nachteil ist auch die häufig auftretende Uneinheitlichkeit der Partikel, die z.B. in einem Lösungsprozess zu sehr unterschiedlichen Lösungszeiten führen.

Ein weiterer Nachteil der Suspensions- gegenüber der Substanzpolymerisation ist die Energiebilanz: Das Aufheizen von ca. 50 % Wasserphase und die nach der Polymerisation nötige Abkühlung dieser Wasserphase sind energie- und zeitaufwendig.

Die nicht kontinuierliche Substanzpolymerisation in Rührkesseln oder Becken führt grundsätzlich nur zu unvollständigen Umsetzungen der Monomere und damit zu hohen Restmonomeranteilen, die wiederum die Lackeigenschaften stören oder vor der Formulierung aufwendig entfernt werden müssen. Zusätzlich muss die Granulation des Produktes in einem separaten Verfahrensschritt erfolgen und kann nicht in den Produktionsprozess integriert werden.

Dem Fachmann ist eine große Zahl verschiedener kontinuierlicher Substanzpolymerisationsmethoden für die Herstellung von Poly(meth)acrylaten bekannt. In EP 0 096 901 wird zum Bsp. eine kontinuierliche Beschickung eines Rührkessels mit einer Monomermischung bestehend aus Styrol, α-Methylstyrol und Acrylsäure und die gleichzeitige Entfernung des Polymerisats beschrieben. Als Reaktionstemperaturen wird ein Bereich zwischen 170 °C und 300 °C beschrieben. Dem Fachmann ist leicht ersichtlich, dass eine Polymerisation in einem kontinuierlich betriebenen Rührkessel nur unvollständig ablaufen kann und zu einem Produkt mit hohen Restmonomeranteilen führen muss. Ferner ist in EP 0 096 901 kein Verfahrensschritt zur Aufarbeitung bzw. zur Granulation des Produktes beschrieben.
Eine große Bedeutung für die Durchführung einer kontinuierlichen Substanzpolymerisation haben inzwischen Rohrreaktoren. In WO 98/04593 wird die kontinuierliche Herstellung von Acrylatharzen bzw. Copolymeren aus Styrol, α-Methylstyrol und Acrylsäure beschrieben. Die Polymerisation wird bei einer Temperatur zwischen 180 °C und 260 °C durchgeführt. Die Herstellung von Polymeren analoger Zusammensetzung für Dispergier- oder Emulgatoranwendungen in einem Temperaturbereich zwischen 210 °C und 246 °C wird in US 6,476,170 ausgelegt. In WO 99/23119 wird die Herstellung von Klebstoffharzen in einem Rohrreaktor bei einer Polymerisationstemperatur zwischen 100 °C und 300 °C beansprucht - in WO 2005/066216 die Herstellung von Schmelzklebstoffen bei Temperaturen unterhalb von 130 °C. Alle hier aufgeführten Produkte werden in den beschriebenen Verfahren keiner Granulation oder ähnlichen Aufarbeitung unterzogen. Dies entspricht der üblichen Vorgehensweise für Produkte in Kleb- oder Heißklebanwendungen, die in der Regel wachsartig oder flüssig vorliegen. Auch sind Beschichtungen in Form eines Lackes oder einer Farbe nicht als Anwendung aufgeführt.
Gleiches gilt auch für das in WO 98/12229 beschriebene Polymerisationsverfahren. Hierbei handelt es sich um eine Variante des Rohrreaktors: den Kreislaufreaktor. Ziel des beanspruchten Verfahrens war die Herstellung von Polymethacrylaten für die Produktion von Formkörpern. Eine Granulation der Produkte oder eine Anwendung in Beschichtungen sind nicht beschrieben. Auch ist zum Beispiel eine Rezepturumstellung in einem kontinuierlich betriebenen Kneter mit deutlich weniger Aufwand verbunden als in einem solchen Rohrreaktor. Auch ist die Reaktionsstrecke deutlich kürzer bzw. die Durchmischung effizienter und damit die Verweilzeit im Reaktionsraum. Dies wiederum kann in einem solchen Rohrreaktor potentiell zu einer größeren thermischen Belastung des Produktes führen.
Eine neue Generation von Reaktoren für die kontinuierliche Substanzpolymerisation von (Meth)Acrylaten stellen die so genannten Taylor-Reaktoren dar. Auch diese Reaktoren sind in einem breiten Temperaturbereich einsetzbar. Eine ausführliche Beschreibung eines entsprechenden Verfahrens zur Herstellung von Bindemitteln für Beschichtungen bzw. Kleb- oder Dichtstoffen findet sich in WO 03/031056. Aber auch diese Reaktoren haben den Nachteil einer schlechteren Durchmischung und einer eher längeren Verweilzeit.
In WO 03/031056 sind zwar Beschichtungen als potentielle Anwendung des erfindungsgemäßen Verfahrens aufgeführt. Eine Verarbeitung - insbesondere eine Granulation - nach der Polymerisation ist jedoch nicht aufgeführt.
Eine Alternative zur kontinuierlichen Beschickung von Reaktionsreaktoren ist die Reaktivextrusion. In WO 2007/087465 wird ein Verfahren zur kontinuierlichen Herstellung von Poly(meth)acrylaten für Klebanwendungen vorgestellt. Eine gezielte Einstellung der Mikrostruktur der Produkte wurde bis dato jedoch noch nicht beschrieben.
Der Reaktivextrusion ist die Knetertechnologie prinzipiell sehr ähnlich. WO 2006/034875 beschreibt ein Verfahren zur kontinuierlichen Massepolymerisation, insbesondere zur Homo- oder Copolymerisation von Thermoplasten und Elastomeren, oberhalb der Glasübergangstemperatur in einem rückgemischten Knetreaktor. Monomere, Katalysatoren, Initiatoren etc. werden dabei kontinuierlich in den Reaktor geführt und mit bereits reagiertem Produkt rückgemischt. Gleichzeitig wird reagiertes Produkt kontinuierlich aus dem Mischkneter entfernt. Das Verfahren kann z. B. auf die kontinuierliche Massepolymerisation von MMA angewandt werden. Das unreagierte Monomer wird durch einen Entgaser abgetrennt und kann dem Reaktor wieder zugeführt werden. Mit der Knetertechnologie sind gegenüber der nachteiligen Reaktivextrusion unter vergleichbaren Durchsatzzeiten deutlich höhere Umsätze zu erzielen. Um mittels einer Reaktivextrusion einen vergleichbaren Umsatz zu realisieren, muss eine deutlich längere Verweilzeit in der Extrusionsstrecke, bzw. eine deutlich verlängerte Extrusionskammer eingeplant werden. Dieses führt jedoch zu einer höheren thermischen Belastung des Materials und kann Nachteile wie eine Produktverfärbung oder uneinheitliche Molekulargewichtsverteilungen mit sich bringen.

WO 2007/112901 beschreibt ein Verfahren zur Behandlung von zähviskosen Produkten, insbesondere zur Durchführung einer Homo- oder Copolymerisation von Thermoplasten und Elastomeren, bei dem ein Umsatz von 90 - 98% erreicht wird. Monomer(e), Katalysator(en) und/oder Initiator(en) und/oder Kettenregler werden einem rückgemischten Mischkneter oder einem Knetreaktor kontinuierlich zugeführt mit bereits reagiertem Produkt rückgemischt und das reagierte Produkt aus dem Mischkneter abgeführt. Hierbei wird das Produkt im Kneter bis zu einer Siedetemperatur erhitzt, Teile der Edukte verdampft und eine Exothermie des Produktes durch Siedekühlung absorbiert. Dieses Verfahren kann ohne oder nur mit sehr geringen Mengen an Lösemitteln durchgeführt werden. Die Einstellung der optimalen Siedetemperatur erfolgt durch Veränderung des Druckes. Die Rückmischung erfolgt bis zum Erreichen einer vorbestimmten Viskosität des Produktes. Die Viskosität wird durch kontinuierliche Zugabe der Edukte aufrechterhalten. Eine integrierte Produktaufarbeitung oder ein Verfahren zur Minimierung von Feinanteilen im Produkt kombiniert mit einer kontinuierlichen Substanzpolymerisation bei der Herstellung von Bindemitteln zum Beispiel für Beschichtungen werden in keiner der aufgeführten Schriften beschrieben und sind nicht Stand der Technik.

In GB 2284425 ist eine kontinuierliche Polymerisation in einem kesselartigen Reaktor ohne thermische Nachbehandlung offenbart.

GB 1524433 offenbart die Synthese von Polystyrol-(meth)acrylnitril-Copolymeren mittels eines Verfahrens, das keine getrennte thermische Nachbehandlung und Entgasung in zwei unterschiedlichen Verfahrensschritten aufweist. Insbesondere weist das Verfahren gemäß GB 1524433 gar keinen Schritt zur thermischen Nachbehandlung auf.

In US 5,574,117 ist ein so genanntes semi-Batch-Verfahren, bei dem die Polymerisation in Batch-Fahrweise bis zu einem Umsatz von ca. 60 oder 80% in einem Kessel durchgeführt wird und anschließend in einem Extruder kontinuierlich, bei gleichzeitiger Entgasung, weiter polymerisiert wird, offenbart. Ein solches Verfahren ist zum Beispiel aus der Acrylglasherstellung hinlänglich bekannt und zeitintensiv.

US 6,160,059 wiederum beschreibt die Reaktion in einem Rohrreaktor ohne thermische Nachbehandlung. Polymerisationen in Rohrreaktoren sind jedoch schwierig durchzuführen und bezüglich der zu erziehlenden Raum-Zeit-Ausbeute nicht optimal.

WO 2009/121640 offenbart die Polymerisation von (Meth acrylaten in einem Kneter. Diese erfolgt jedoch ohne isolierte thermische Nachbehandlung und ohne Granulation.

### Aufgabe

Aufgabe der vorliegenden Erfindung war es, verbesserte Bindemittel auf Acrylat- bzw. Methacrylat- (im Weiteren kurz (Meth)Acrylat-) Basis für Lackformulierungen zur Verfügung zu stellen.
Insbesondere war es Aufgabe der vorliegenden Erfindung, (Meth)Acrylat-Bindemittel mit gegenüber dem Stand der Technik verbesserten Verarbeitungseigenschaften zur Verfügung zu stellen. Dazu soll das Bindemittel nach der Produktion als Granulat vorliegen und einen Fein- bzw. Staubanteil, d.h. Partikel die kleiner sind als 250 µm, von weniger als 0,5 Gew% aufweisen. Auch soll das Bindemittel keine groben Bestandteile, d.h. Partikel, die größer sind als 3 mm, enthalten.

Gleichzeitig war es Aufgabe der vorliegenden Erfindung, besagtes Bindemittel mittels eines kontinuierlichen Herstellungsverfahrens herzustellen. Dabei ist unter einem kontinuierlichen Herstellungsverfahren eine kontinuierlich, ohne Unterbrechung durchführbares Verfahren gemeint, das im Einzelnen aus den Verfahrensschritten Monomerdosierung, Polymerisation, Entgasung und Granulation besteht.

Eine weitere Aufgabe bestand darin, ein umweltfreundliches Verfahren, das entweder lösungsmittelfrei oder mit einem maximalen Lösungsmittelanteil von 10 Gew% durchgeführt werden kann, und das unter hohem Umsatz bzw. mit nur einem sehr geringen Anteil an Restmonomeren durchgeführt werden kann, zur Verfügung zu stellen.

Zusätzlich sollen die Bindemittel über eine hohe Thermostabilität - zum Beispiel bei Temperaturen von ca. 214 °C - verfügen. Dies soll durch einen besonders geringen Anteil an Kopf-Kopf-Verknüpfungen in der Polymerkette gewährleistet werden.

Eine weitere Aufgabe ergab sich aus den gestellten Anforderungen an die hohen Glanzeigenschaften des Bindemittels dergestalt, dass das Verfahren ohne Zugabe von Hilfsstoffen wie Emulgatoren, Stabilisatoren oder Entschäumern durchgeführt werden kann.

### Lösung

Gelöst wurden die Aufgaben durch einen modifizierten Einsatz eines kontinuierlichen Substanzpolymerisationsverfahrens, mit Hilfe dessen (Meth)Acrylate mit hohem Umsatz lösungsmittelfrei polymerisiert werden können.
Insbesondere werden die Aufgaben gelöst durch ein neuartiges
Substanzpolymerisationsverfahren zur Herstellung eines (Meth)acrylat- Bindemittels für Lackformulierungen über eine kontinuierliche Substanzpolymerisation, die dadurch gekennzeichnet ist, dass das Verfahren
a.) bei einer Reaktionstemperatur, die zwischen 20 °C und 250 °C liegt, in einem Kneter durchgeführt wird, dass
b.) die Monomere kontinuierlich in den Kneter zudosiert werden, dass
c.) das Bindemittel in einem direkt an die Polymerisation anschließenden, kontinuierlichen Prozessschritt in einem Schmelzerohr oder einem Wärmetauscher bei einer Temperatur oberhalb von 120 °C thermisch nachbehandelt wird, dass
d.) das Bindemittel darauf folgend in einem Entgasungskneter, Entgasungsextruder oder Flash-Entgaser bei einer Temperatur oberhalb von 120 °C entgast wird, dass
e.) das Bindemittel in einem direkt darauf anschließenden, vierten, kontinuierlichen Prozessschritt granuliert wird, und dass
das granulierte Bindemittel definierte Partikelgrößen mit einem Bestandteil von Partikeln, die kleiner sind als 250 µm, von maximal 0,5 Gew% und keine Partikel, die größer sind als 3 mm, aufweist.

### Lösung

Gelöst wurden die Aufgaben durch einen modifizierten Einsatz eines kontinuierlichen Substanzpolymerisationsverfahrens, mit Hilfe dessen (Meth)Acrylate mit hohem Umsatz lösungsmittelfrei polymerisiert werden können. Der Vorteil eines Substanzpolymerisationsverfahrens gegenüber der Suspensionspolymerisation ist die hohe Reinheit der Produkte, die ohne Zusatz von Hilfsstoffen wie Emulgatoren, Stabilisatoren, Entschäumer oder anderen Suspensionshilfsmitteln hergestellt werden können. Ein weiterer Vorteil ist die Wasserfreiheit des Produktes. Mittels Suspensionspolymerisation hergestellte Bindemittel zeigen häufig verminderte Glanz-und zuweilen auch Dispergiereigenschaften in Lacken. Dieser Effekt ist nicht nur auf die Polymermikrostruktur, sondern auch auf die verfahrensbedingte Restfeuchte des Polymers zurückzuführen.
Ein weiterer Vorteil der Substanzpolymerisation gegenüber der Suspensionspolymerisation ist der Einsatz beliebiger Mengen an hydrophilen Comonomeren wie (Meth)Acrylsäuren, amino- oder hydroxyfunktionellen (Meth)Acrylaten.
Der Vorteil gegenüber der Lösungspolymerisation ist das Fehlen bzw. der nur sehr geringe Anteil von volatilen Bestandteilen im Polymerisationsprozess bzw. im Primärprodukt.
Der Vorteil des erfindungsgemäßen Verfahrens gegenüber einer Substanzpolymerisation in Batch-Fahrweise ist der deutlich höhere erzielbare Umsatz und damit der geringere Anteil an Restmonomeren im Endprodukt. Hinzu kommen eine höhere Produktionsgeschwindigkeit und eine breitere Variatiönsmöglichkeit der Prozessparameter.

Ein besonderer Vorteil des erfindungsgemäßen Verfahrens zur Herstellung von Bindemitteln für Lacke oder Beschichtungsmassen ist die Form, in der das Produkt am Ende des Herstellungsprozesses ohne eine weitere Verarbeitung vorliegt. Durch die Kombination eines kontinuierlich betriebenen Kneters zur Polymerisation, einer Entgasungsstufe wie zum Beispiel einem Flash-Entgaser oder einem Entgasungskneter zur Entfernung volatiler Bestandteile bzw. zur thermischen Nachbehandlung des Polymers und eines Granulators, werden Produkte erhalten, die erstens frei von Lösungsmitteln sind, zweitens einen Wassergehalt kleiner 1 Gew% aufweisen, drittens ausschließlich aus Bestandteilen bestehen, die auf die eingesetzten Monomere, Kettenübertragungsreagenzien und Initiatoren zurückzuführen sind und die eine einstellbaren Granulatgröße aufweisen.
Dieses erfindungsgemäß hergestellte Granulat weißt einen Fein- bzw. Staubanteil, d.h. Partikel die kleiner sind als 250 µm, von weniger als 0,5 Gew% auf. Staubanteile können bei der späteren Verarbeitung in vielerlei Hinsicht problematisch sein. Partikel solcher Größe können durch statische Aufladung an verschiedenen Oberflächen hängen bleiben und so z.B. zur Verstopfung von Düsen führen. Auch können sich z.B. bei Umschüttvorgängen Staubwolken bilden, die nicht nur zu Produktverlust führen und besondere Atemschutzmaßnahmen erforderlich machen, sondern zusätzlich die Gefahr von Staubexplosionen in sich bergen.
Das erfindungsgemäß hergestellte Bindemittel enthält ferner keine groben Bestandteile, d.h. Partikel, die größer sind als 3 mm. Größere Partikel können nicht nur zu Verstopfungen z.B. von Düsen führen, sondern verringern zusätzlich die Schüttdichte. Ein besonderer Nachteil eines solchen Grobgutes ist insbesondere die verringerte Löslichkeitsgeschwindigkeit in organischen Lösungsmitteln, Weichmachern oder Wasser. Diese ergibt sich leicht ersichtlich aus einem gegenüber kleineren Partikeln ungünstigeren Oberfläche-Masse-Verhältnis.

Das bevorzugte Verfahren zur Lösung der Aufgabe ist die kontinuierlich betriebene Knetertechnologie. Eine Beschreibung eines solchen rückgemischten Knetreaktors zur kontinuierlichen Massepolymerisation der Firma List findet sich in WO 2006/034875 bzw. in WO 2007/112901. Die Polymerisation wird oberhalb der Glasübergangstemperatur des Polymers durchgeführt. Monomere, Katalysatoren, Initiatoren etc. werden dabei kontinuierlich in den Reaktor geführt und mit bereits reagiertem Produkt rückgemischt. Gleichzeitig wird reagiertes Produkt kontinuierlich aus dem Mischkneter entfernt. Das unreagierte Monomer wird durch einen Restentgaser abgetrennt und kann dem Reaktor wieder zugeführt werden. Gleichzeitig wird in diesem Restentgaser die thermische Nachbehandlung des Polymers durchgeführt.

Ein besonderer Aspekt der erfindungsgemäßen Lösung ist die Möglichkeit einer individuellen Wahl der Polymerisationstemperatur in Abhängigkeit von den Anforderungen an das jeweilige Produkt bzw. die jeweilige Anwendung. Die Eigenschaften des herzustellenden Bindemittels in Bezug auf Glanz, Thermostabilität, Dispergier- bzw. Benetzungseigenschaften von Pigmenten und Verarbeitungseigenschaften des Bindemittels bzw. der Lackformulierung hängen überraschend nicht nur von der Zusammensetzung, dem Molekulargewicht, der Molekulargewichtsverteilung, den Funktionalitäten und den Endgruppen, sondern insbesondere auch von der Mikrostruktur der Polymerketten ab. Mit Mikrostruktur sind in diesem Fall die Taktizität und der Anteil von Kopf-Kopf-Verknüpfungen in der Kette des Polymers gemeint. Dem Fachmann ist bekannt, dass ein freiradikalisch hergestelltes Poly(meth)acrylat in Abhängigkeit von der Monomerzusammensetzung ein Mischpolymerisat zwischen syndiotaktischen und ataktischen Abschnitten (Triaden) - mit nur einem geringen Anteil isotaktischer Triaden - ist. Polymethacrylate mit besonders großen syndiotaktischen Anteilen lassen sich nur mittels technisch aufwendiger Verfahren wie einer anionischen Polymerisation bei besonders tiefen Temperaturen oder einer metallinitiierten Gruppentransferpolymerisation (GTP) mit stereoselektiv wirkenden Katalysatoren herstellen. Hochgradig isotaktische Polymere hingegen lassen sich fast nur über letztere Methode realisieren. Eine dritte Möglichkeit einen stereoselektiven Einfluss auf eine Polymerisation vorzunehmen besteht darin, einen Komplexbildner in Form eines optisch aktiven Reagenz in die Polymerisationslösung zu geben. Siehe dazu z.B. EP 1 611 162. Dieses Vorgehen hat jedoch verschiedene Nachteile: zum einen ist es nur in einer Lösungspolymerisation effizient einsetzbar, zum anderen stellt das Auxiliar eine weitere Polymerisationskomponente dar, die entweder aufwendig entfernt werden muss oder aber die optischen Eigenschaften des Endproduktes beeinflusst.

Ein weiterer Aspekt der Lackqualität ist der Glanz. Es wurde bereits ausgelegt, dass der Glanz stark vom Wasser- bzw. Lösungsmittelgehalt in der Beschichtungsmatrix beeinflusst wird. Der große Vorteil der erfindungsgemäßen kontinuierlich betriebenen Substantpolymerisation in einem Kneter gegenüber herkömmlichen Verfahren wie der Lösungs-, Suspensions- oder Emulsionspolymerisation ist, dass sie ohne Zugabe von Lösungsmitteln, Wasser oder irgendwelchen Prozesshilfsstoffen wie Emulgatoren, Entschäumern, Stabilisatoren oder Verteilern durchgeführt werden kann. Diese Bestandteile beeinflussen in der Anwendung jedoch die Glanzeigenschaften negativ.

Überraschend wurde jedoch zusätzlich festgestellt, dass auch die Mikrostruktur einen großen messbaren Effekt bei den Glanzwerten eines Lackes herbeiführen kann. In Abhängigkeit von der Polymerzusammensetzung konnte gezeigt werden, dass Polymere mit einem geringeren syndiotaktischen Anteil verbesserte Glanzwerte gegenüber als Standard betrachteten Suspensionspolymerisaten, die bei 80 °C hergestellt wurden, zeigen.

Ein weiterer Aspekt der vorliegenden Erfindung ist die Darstellung von Bindemitteln auf (Meth)Acrylat-Basis, die eine Thermostabilität bis 214 °C, bevorzugt bis 230 °C, ganz besonders bevorzugt bis 250 °C aufweisen. Mit Thermostabilität bei einer angegebenen Temperatur ist ein Masseverlust von weniger als 1 Gew.-% bei einer Thermogravimetrie (TGA) gemäß DIN EN ISO 11358 gemeint. Insbesondere die Polymerisation bei höheren Temperaturen begünstigt die Bildung so genannter Kopf-Kopf-Verknüpfungen. Diese Bindungen in der Polymerkette, bei denen im Falle von Poly(meth)acrylaten zwei quarternäre Kohlenstoffatome miteinander verknüpft sind, zeigen bei Temperaturen oberhalb von 150 °C eine thermische Instabilität und können bei einem Bruch die Depolymerisation einer Kette initiieren. Dies führt zu einer verminderten Produktionsausbeute und einem erhöhten Restmonomerengehalt im Polymer. Zusätzlich können solche Produkte aufgrund instabiler Bindungen verringerte Lager- bzw. Wetterstabilitäten zeigen.
Die Bildung von Kopf-Kopf-Verknüpfungen in Poly(meth)acrylaten bei höheren Polymerisationstemperaturen ist nicht nur ein Phänomen, das in der Substanzpolymerisation beobachtet werden kann, sondern tritt ebenfalls bei Lösungspolymerisaten, die bei entsprechender Temperatur hergestellt wurden, auf.
In der vorliegenden Erfindung wurde das Problem der Kopf-Kopf-Verknüpfung und damit der verminderten Thermostabilität dergestalt gelöst, dass nach der abgeschlossenen Polymerisation das Produkt thermisch nachbehandelt wird. Bei einer Temperatur oberhalb von 120 °C, bevorzugt oberhalb von 160 °C, besonders bevorzugt oberhalb von 180 °C, können nicht nur im Produkt enthaltene volatile Bestandteile wie Restmonomere oder optional verwendetes Lösungsmittel entfernt werden, sondern es werden auch die Kopf-Kopf-Bindungen geöffnet und die betreffenden Polymerketten damit stabilisiert bzw. depolymerisiert und die entstehenden niedermolekularen Verbindungen entfernt. Die so wieder gewonnenen Monomere können optional sogar in den Polymerisationsprozess zurückgeführt werden. Ein solches Vorgehen ist in die Knetertechnologie problemlos durch einen angeschlossenen Verfahrensschritt wie eine Flash-Entgasung, einen Entgasungskneter oder einen Entgasungsextruder implementierbar.
In einer Variante dieses Verfahrens finden die thermische Zersetzung der Kopf-Kopf-Verknüpfungen und die Entgasung getrennt voneinander statt. Zunächst wird das Polymer über ein Schmelzerohr oder einen Wärmetauscher befördert. Dabei findet die thermische Nachbehandlung statt. Daran angeschlossen werden wie oben beschrieben die volatilen Bestandteile, wie Restmonomere, Lösungsmittel und die bei der thermischen Nachbehandlung gebildeten volatilen Bestandteile mittels eines Entgasungskneter, Entgasungsextruder oder Flash-Entgaser entfernt und die Schmelze zur Granulation weitergeleitet.

Monomere, die polymerisiert werden, sind ausgewählt aus der Gruppe der (Meth)Acrylate wie beispielsweise Alkyl(meth)acrylate von geradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, tert-Butyl(meth)acrylat, Pentyl(meth)acrylat, 2-Ethylhexyl(meth)acrylat, Stearyl(meth)acrylat, Lauryl(meth)acrylat, Cyclohexyl(meth)acrylat, Isobornyl(meth)acrylat; Aryl-(meth)acrylate wie zum Beispiel Benzyl(meth)acrylat oder Phenyl(meth)acrylat, die jeweils unsubstituiert oder 1-4-fach substituierte Arylreste aufweisen können; andere aromatisch substituierte (Meth)Acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxy-propylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxy-methylmethacrylat, 1-Ethoxybutylmethacrylat, 1-Ethoxyethylmethacrylat, Ethoxy-methylmethacrylat, Poly(ethylenglycol)methylether(meth)acrylat und Poly-(propylenglycol)methylether(meth)acrylat. Die Monomerauswahl kann auch jeweilige hydroxyfunktionalisierte und/oder aminofunktionalisierte und/oder mercaptofunktionalisierte und/oder olefinisch funktionalisierte und/oder carboxylfunktionalisierte Acrylate bzw. Methacrylate wie zum Beispiel Allylmethacrylat oder Hydroxyethylmethacrylat umfassen.

Neben den zuvor dargelegten (Meth)Acrylaten können die zu polymerisierenden Zusammensetzungen auch weitere ungesättigte Monomere aufweisen, die mit den zuvor genannten (Meth)Acrylaten copolymerisierbar oder homopolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol, halogenierte Styrole wie beispielsweise Monochlorstyrole, Dichlorstyrole, Tribromstyrole und Tetrabromstyrole; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinyloxolan, Vinylfuran, Vinylthiophen, Vinylthiolan, Vinylthiazole, Vinyloxazole und Isoprenylether; Maleinsäurederivate, wie beispielsweise Maleinsäureanhydrid, Maleinimid, Methylmaleinimid, Cyclohexylmaleinimid und Diene wie z.B. Divinylbenzol, sowie die jeweiligen hydroxyfunktionalisierten und/oder aminofunktionalisierten und/oder mercaptofunktionalisierten und/oder olefinisch funtkionalisierten Verbindungen. Ferner können diese Copolymere auch derart hergestellt werden, dass sie eine Hydroxy-und/oder Amino- und/oder Mercaptofunktionalität und/oder eine olefinische Funktionalität in einem Substituenten aufweisen. Solche Monomere sind beispielsweise Vinylpiperidin, 1-Vinylimidazol, N-Vinylpyrrolidon, 2-Vinylpirrolidon, N-Vinylpirrolidin, 3-Vinylpyrrolidin, N-Vinylcaprolactam, N-Vinylbutyrolactam, hydrierte Vinylthiazole und hydrierte Vinyloxazole.

Als Polymerisationsinitiatoren, die in der Regel der Monomerphase zugesetzt werden, dienen die üblicherweise verwendeten radikalischen Initiatoren, insbesondere Peroxide und Azoverbindungen. Unter Umständen kann es vorteilhaft sein, ein Gemisch verschiedener Initiatoren einzusetzen. Die Einsatzmenge liegt im Allgemeinen im Bereich zwischen 0,1 und 5 Gewichtsprozent, bezogen auf die Monomerphase. Vorzugsweise finden Azoverbindungen wie Azobisisobuttersäurenitril, 1,1'-Azobis(cyclohexancarbonitril) (WAKO^{®} V40), 2-(Carbamoylazo)-isobutyronitril (WAKO^{®} V30) oder Perester wie tert.-Butylperoctoat, Di(tert-butyl)peroxid (DTBP), Di(tert-amyl)peroxid (DTAP), tert-Butylperoxy-(2-ethylhexyl)carbonat (TBPEHC) und weitere bei hoher Temperatur zerfallende Peroxide als Radikalinitiator Verwendung. Weitere Beispiele geeigneter Initiatoren sind Octanoylperoxid, Decanoylperoxid, Lauroylperoxid, Benzoylperoxid, Monochlorbenzoylperoxid, Dichlorbenzoylperoxid, p-Ethylbenzoylperoxid, tert-Butylperbenzoat oder Azobis-(2,4-dimethyl)-valeronitril.

Zur Einstellung des Molekulargewichts des gebildeten Polymerisats können der Monomerphase auch in üblicher Weise bis zu 8 Gew.-% eines oder mehrerer an sich bekannter Kettenregler zugesetzt werden. Beispielsweise seien genannt: Mercaptane, wie n-Butylmercaptan, n-Octylmercaptan, n-Dodecylmercaptan tert-Dodecylmercaptan oder Mercaptoethanol; Thioglykolsäure oder Thioglykolsäureester wie Thioglykolsäureisooctylester oder Thioglykolsäurelaurylester; aliphatische Chlorverbindungen; Enolether oder dimeres α-Methylstyrol.
Falls verzweigte Polymerisate hergestellt werden sollen, kann die Monomerphase auch bis zu etwa einem Gewichtsprozent mehrfunktionelle Monomere enthalten, beispielsweise Ethylenglykoldi(meth)acrylat, Butandioldi(meth)acrylat oder Divinylbenzol.

Um die Viskosität im kontinuierlich betriebenen Reaktor optimal einzustellen können dem System optional bis zu 10 Gew.-% eines Lösungsmittels oder eines Weichmachers zugesetzt werden. Bei besonders hohen Schmelzviskositäten kann eine solche Zugabe nötig sein, um eine optimale Durchmischung der Reaktionslösung zu gewährleisten. Bevorzugt werden der Monomermischung maximal 5 Gew.-% zugesetzt. Besonders bevorzugt wird die Polymerisation ohne Zugabe eines Lösungsmittels oder eines Weichmachers durchgeführt. Bei den einsetzbaren Zugabestoffen gibt es keine Einschränkungen. Es kann sich beispielsweise dabei um Acetate, Aliphaten, Aromaten oder auch Polyether bzw. Phthalate handeln.

Es ergibt sich ein breites Anwendungsfeld für die erfindungsgemäß hergestellten Produkte. Bevorzugt werden die auf (Meth)Acrylaten basierenden Substanzpolymerisate in Beschichtungen z.B. von Metall-, Plastik-, Keramik- oder Holzoberflächen eingesetzt. Ein Beispiel für eine Beschichtungsmasse ist die Verwendung der erfindungsgemäßen Polymere als Bindemittel in Bautenfarben, Schiffs- oder Containerfarben. Ebenfalls können die Polymere in Straßenmarkierungen, Bodenbeschichtungen, Druckfarben, Heißsiegellacken, Reaktivschmelzklebstoffen, Klebmassen oder Dichtmassen verwendet werden.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

### Partikelgrößen

Die Partikelgrößen und die Partikelgrößenverteilungen, die im Folgenden als d₅₀-Wert angegeben sind, wurden mit einem Coulter LS 13 320 gemäß ISO 13320-1 in einem Messbereich zwischen 0,04 µm und 2000 µm bestimmt.
Partikelgrößen größer 2000 µm wurden zusätzlich mit einem Camsizer der Fa. Retsch Technology gemäß ISO/FDISm13322-2.2:2006(E) bestimmt.

### Messung der Glasübergangstemperaturen

Die Messung der Glasübergangstemperaturen erfolgt mittels Dynamische Differenz-Thermoanalyse (DSC) gemäß DIN EN ISO 11357-1.

### Messung der Lösezeiten

Die unveränderten Produkte der Beispiel- bzw. Vergleichsbeispielsynthesen werden in einem Klimaraum 24 h bei 23 °C temperiert. An einem Dissolver (Modell Getzmann VMA) wird eine Dissolverscheibe mit einem Durchmesser von 4 cm montiert und der Gerätethermostat auf 23 °C eingestellt. In das 250 mL Doppelwandgefäß werden 90 mL Lösungsmittel vorgelegt und über einen Zeitraum von 5 min unter leichtem Rühren temperiert. Darauf werden 60 g der Polymerprobe zugegeben, der Deckel sofort geschlossen und das Rührwerk auf 1200 Umdrehungen/min gestellt. In Abständen von 1 min wird der Deckel geöffnet und mittels einer Glaspipette eine Probe zur optischen Begutachtung angesaugt. Darauf wird diese in das Gefäß zurückgelassen. Nach 20 min werden die Messintervalle auf 5 min verlängert.
Sobald bei einer optischen Begutachtung keine Fest- bzw. Schwebstoffe mehr feststellbar sind, wird das Rührwerk entfernt, die Zeit notiert und zur Kontrolle die ganze Probe optisch bewertet. Für den Fall, dass noch Schwebstoffe feststellbar waren, wurde die ganze Messung wiederholt.
Alle Messungen werden insgesamt fünfmal durchgeführt und in der entsprechenden Tabelle als Messbereich angegeben.

### Beispiel B1, Zusammensetzung 1

### Kontinuierliche Substanzpolymerisation

Eine Mischung bestehend aus 20 Gew.-% Methylmethacrylat, 80 Gew.-% n-Butylmethacrylat, 0,4 Gew.-% TBPEHC der Firma Degussa Initiators und 0,4 Gew.-% Ethylhexylthioglycolat (TGEH) wird kontinuierlich einem rückgemischten Knetreaktor der Firma List, wie zum Beispiel beschrieben in WO 2006/034875, zugeführt und gleichzeitig reagiertes Polymer kontinuierlich aus dem Reaktor herausgeführt. Die Innentemperatur im Reaktor beträgt 140 °C. Die mittlere Verweilzeit liegt bei ca. 30 Minuten. Die Polymerschmelze wird unmittelbar nach dem Reaktor über ein Schmelzerohr, in dem bei 190 °C thermisch instabile Kopf-Kopf-Verknüpfungen aufgebrochen werden, in einen Entgasungskneter der Firma List überführt, in dem bei einer Temperatur von 180 °C restliche unreagierte Monomere aus dem Polymer entfernt werden. Zwischen Reaktor und Entgasungskneter gibt es die Möglichkeit, eine Probe für TGA-Messungen zu entnehmen. Nach der Entgasung wird die Polymerschmelze direkt weiter in einen Unterwassergranulator Compact 120 der Fa. BKG GmbH, ausgestattet mit einer 0,8 mm Lochplatte, geleitet. Das Granulat wird anschließend in einem Trockner Master 300 getrocknet, in einem geeigneten Gefäß aufgefangen und die Partikelgröße - wie oben beschrieben - bestimmt.

### Referenzbeispiel R1, Zusammensetzung 1 (Suspensionspolymerisation)

In einen 5L HWS-Glasreaktor, ausgestattet mit Inter-MIG-Rührer und Rückflußkühler werden 3200 ml VE-Wasser vorgelegt, der Rührer auf eine Drehzahl von 300 Umdrehungen pro Minute eingestellt und auf eine Außentemperatur von 40°C aufgeheizt. Es werden 200 g Polyacrylsäure und 0,5 g Kaliumhydrogensulfat zugegeben und durch Rühren verteilt. In einem Becherglas werden 1280 g (80%) n-Butylmethacrylat, 320 g (20%) Methylmethacrylat, 7,5 g Peroxan LP und 4 g TGEH gemischt und unter Rühren homogenisiert. Die Monomerstammlösung wird in den Reaktor gepumpt. Die Innentemperatur wird auf 85 °C geregelt. Die Polymerisation ist beendet, wenn die Wärmeentwicklung abbricht. Der Ansatz wird abgekühlt. Durch eine Filter-Nutsche wird die Mutterlauge von den Polymerperlen abgetrennt. Die Partikelgröße wird wie oben beschrieben bestimmt.

### Beispiel B2, Zusammensetzung 2

Wie Beispiel 1, jedoch besteht die dem Reaktor zugeführte Mischung aus 65 % n-Butylmethacrylat, 34 % Methylmethacrylat, 1 % Methacrylsäure, 0,8 % Laurylmercaptan der Firma Dr. Spiess Chemische Fabrik GmbH. Nach der Entgasung im Entgasungskneter wird die Polymerschmelze direkt weiter in einen Mikrogranulator der Fa. BKG GmbH, ausgestattet mit einer 0,6 mm Lockplatte, geleitet. Das Granulat wird anschließend analog zu Beispiel B1 getrocknet, gesammelt und die Partikelgröße bestimmt.

### Beispiel B3, Zusammensetzung 2

Wie Beispiel 2 mit einer veränderten Voreinstellung der Mikrogranulator-Lochgröße durch Verwendung einer 1,5 mm Lochplatte mit dem Ziel gröbere Partikel zu erhalten.

### Referenzbeispiel R2, Zusammensetzung 2 (Suspensionspolymerisation)

Wie Referenzbeispiel 1, jedoch mit 510 g Methylmethacrylat, 975 g n-Butylmethacrylat, 15 g Methacrylsäure, 7,5 g Peroxan LP und 12 g Laurylmercaptan der Firma Dr. Spiess Chemische Fabrik GmbH.

### Referenzbeispiel R3, Zusammensetzung 2 (Substanzpolymerisation)

Zwischen zwei mit Keder am Rand abgedichteten Glasplatten, zwischen denen der Abstand 10 mm beträgt, werden 10 g Methacrylsäure, 340 g Methylmethacrylat, 650 g n-Butylmethacrylat 2,5 g TRIGONOX 21 S (Fa. Akzo Nobel) und 3,5 g Laurylmercaptan der Firma Dr. Spiess Chemische Fabrik GmbH vorgelegt. Die gesamte Form wird für 24 h bei 40 °C in ein Wasserbad gestellt. Anschließend wird für weitere 8 h bei 100 °C getempert. Nach dem Abkühlen wird das Produkt aus der Form entfernt und mittels einer Mühle gebrochen.

| | d₅₀ | Anteil Partikel < 250 µm | Anteil Partikel < 500 µm | Anteil Partikel < 2000 µm | Anteil Partikel > 2000 µm | Anteil Partikel < 3000 µm | Anteil Partikel > 3000 µm |
|---|---|---|---|---|---|---|---|
| B1 | 1788 µm | 0,0 % | 0,0 % | 80,7 % | 9,3 % | 100,0 % | 0,0 % |
| R1 | 455 µm | 7,3 % | 62,2 % | 99,9 % | 0,1% | 100,0 % | 0,0 % |
| | | | | | | | |
| B2 | 646 µm | 0,0 % | 8,7 % | 100, 0 % | 0,0 % | n.b. | n.b. |
| B3 | 1706 µm | 0,0 % | 0,0 % | 83,8 % | n.b. | 100,0 % | 0,0 % |
| R2 | 296 µm | 31,6 % | 98,4 % | 100,0 % | 0,0 % | n.b. | n.b. |
| R3 | n.b. | n.b. | n.b. | n.b. | n.b. | n.b. | 88 % |

Die beiden mittels Suspensionspolymerisation hergestellten Vergleichsbeispiele zeigen mit 7,3 gew% bzw. 31,6 gew% Material mit einer Partikelgröße kleiner 250 µm relevante Anteile Feingut. Die erfindungsgemäß hergestellten Polymere sind dagegen frei von Feingut dieser Größe. Gleichzeitig ist es möglich, mittels des erfindungsgemäßen Verfahrens Polymerpulver herzustellen, die genauso wie die Suspensionspolymerisate R1 bzw. R2 frei von groben Partikeln sind. Diese Bestandteile würden die Lösegeschwindigkeit und die Verarbeitbarkeit eines Lackes negativ beeinträchtigen.

### Lösezeiten

| | Lösungsmittel | d₅₀ | Lösezeit | Glasübergangstemperatur T_{g} |
|---|---|---|---|---|
| B1 | MEK | 1788 µm | 19 - 25 min | n.b. |
| R1 | MEK | 455 µm | 8 - 11 min | n.b. |
| | | | | |
| B2 | Xylol | 646 µm | 15 - 17 min | 57,6 °C |
| B3 | Xylol | 1706 µm | 50 - 55 min | n.b. |
| R2 | Xylol | 296 µm | 11 - 14 min | 63,0 °C |
| R3 | Xylol | n.b. | 70 - 75 min | n.b. |
| R4 | Xylol | < 710µm | 13 - 16 min | n.b. |

| | | | | |
|---|---|---|---|---|
| MEK: Methylethylketon | | | | |

Bei Referenzbeispiel R4 handelt es sich um eine Siebfraktion aus Beispiel B2 mit einer Partikelgröße kleiner 710 µm. Der Vergleich mit Referenzbeispiel R2 zeigt, dass bzgl. der Lösezeit keine großen, von der Partikelgröße unabhängigen Effekte zu erwarten sind. Es zeigt sich auch, dass die Lösezeiten von Beispiel B2 im Vergleich zu Referenz R2 bzw. B1 im Vergleich zu R1 trotz ca. doppelten bzw. mehr als dreifachen D₅₀-Werten nur 20% bis 37% bzw. ca. 130% höher liegen. Dem entgegen hat man den großen Vorteil, keine Feinanteile wie bei einem Suspensionspolymerisat im Produkt zu haben und damit, wie bereits ausgeführt, eine deutlich bessere Verarbeitbarkeit gewährleisten zu können.
Durch Wahl einer geeigneten Lochplatte konnte mit Beispiel B2 zusätzlich gezeigt werden, dass durch geringfügige Modifikationen das weiterhin erfindungsgemäße Verfahren auch bezüglich der Produkt-Lösezeit - unter weiterer Vermeidung der Bildung von Grob- oder Feinanteilen - optimiert werden kann.
Der Vorteil gegenüber einem nicht kontinuierlich hergestellten, nach Stand der Technik gemahlenen Substanzpolymerisation (Referenzbeispiel R3) ist in einer drei- bis vierfachen Lösezeit zu sehen. Selbst ein besonders großteilig granuliertes erfindungsgemäßes Beispiel (B3) zeigt eine noch deutlich schnellere Löslichkeit.

## Patentansprüche

1. Substanzpolymerisationsverfahren zur Herstellung eines (Meth)acrylat-Bindemittels für Lackformulierungen über kontinuierliche Substanzpolymerisation,
**dadurch gekennzeichnet, dass**
das Verfahren a.) bei einer Reaktionstemperatur, die zwischen 20 °C und 250 °C liegt, in einem Kneter durchgeführt wird,
dass b.) die Monomere kontinuierlich in den Kneter zudosiert werden,
dass c.) das Bindemittel in einem direkt an die Polymerisation anschließenden, kontinuierlichen Prozessschritt in einem Schmelzerohr oder einem Wärmetauscher bei einer Temperatur oberhalb von 120 °C thermisch nachbehandelt wird,
dass d.) das Bindemittel darauf folgend in einem Entgasungskneter, Entgasungsextruder oder Flash-Entgaser bei einer Temperatur oberhalb von 120 °C entgast wird,
dass e.) das Bindemittel in einem direkt darauf anschließenden kontinuierlichen Prozessschritt granuliert wird,
und dass das granulierte Bindemittel definierte Partikelgrößen mit einem Bestandteil von Partikeln, die kleiner sind als 250 µm, von maximal 0,5 Gew% und keine Partikel, die größer sind als 3 mm, aufweist.

2. Substanzpolymerisationsverfahren gemäß Anspruch 1
**dadurch gekennzeichnet, dass**
a.) das Bindemittel aus einer Monomermischung, die ausschließlich aus Monomeren und Initiatoren sowie optional Kettenübertragungsreagenzien und maximal 10 Gew.-% Lösungsmittel besteht, hergestellt wird,
b.) das Verfahren ohne Zugabe von Hilfsstoffen wie Emulgatoren, Stabilisatoren oder Entschäumern durchgeführt wird,
und c.) durch eine thermische Nachbehandlung in dem Verfahren die Polymere bis 214 °C einen Masseverlust von weniger als 1 Gew.-% bei einer Thermogravimetrie (TGA) gemäß DIN EN ISO 11358 aufweisen.

3. Substanzpolymerisationsverfahren gemäß Anspruch 1
**dadurch gekennzeichnet, dass**
durch eine thermische Nachbehandlung bei einer Temperatur von mehr als 160 °C in einer dem Reaktor nachgeschalteten Einrichtung
a.) das Bindemittel bis 214 °C einen Masseverlust von weniger als 1 Gew.-% bei einer Thermogravimetrie (TGA) gemäß DIN EN ISO 11358 aufweist und
dass simultan oder in einem weiteren direkt auf die thermische Nachbehandlung folgenden, kontinuierlich betriebenen Prozessschritt
b.) volatile Bestandteile aus dem Bindemittel entfernt werden.

4. Substanzpolymerisationsverfahren gemäß Anspruch 1
**dadurch gekennzeichnet, dass**
durch eine Granulation und ohne eine Siebung ein Bindemittel erhalten wird, das
a.) keine Bestandteile enthält, die größer sind als 3 mm und
b.) maximal 0,5 Gew% Bestandteile enthält, die kleiner sind 250 µm.

5. Substanzpolymerisationsverfahren gemäß Anspruch 1
**dadurch gekennzeichnet, dass**
die Reaktionstemperatur oberhalb von 100 °C liegt, und dass die Glasübergangstemperatur um 2 °C geringer ist als bei einem Polymer gleicher Zusammensetzung, das mittels Suspensionspolymerisation bei 80 °C hergestellt wurde.

## Claims

1. Mass polymerization process for the preparation of a (meth)acrylate binder for coating formulations via continuous mass polymerization,
**characterized in that**
the process
a.) is carried out in a kneader at a reaction temperature which is between 20°C and 250°C,
b.) the monomers are metered into the kneader continuously,
c.) in a continuous process step directly following polymerization, the binder is thermally aftertreated in a melt tube or a heat exchanger at a temperature of 120°C,
d.) the binder is subsequently devolatilized in a devolatilization kneader, vented extruder or flash devolatilizer at a temperature above 120°C,
e.) the binder is granulated in a directly subsequent, continuous process step,
and the granulated binder has defined particle sizes with a component of not more than 0.5% by weight of particles which are smaller than 250 µm and no particles which are larger than 3 mm.

2. Mass polymerization process according to Claim 1, **characterized in that**
a.) the binder is prepared from a monomer mixture which consists exclusively of monomers and initiators and optionally chain-transfer angents and not more than 10% by weight of solvent,
b.) the process is carried out without addition of auxiliaries, such as emulsifiers, stabilizers or antifoams,
and c.) the polymers have, up to 214°C, a loss of mass of less than 1% by weight in a thermogravimetric analysis (TGA) according to DIN EN ISO 11358 as a result of a thermal aftertreatment in the process.

3. Mass polymerization process according to Claim 1, **characterized in that**, as a result of a thermal aftertreatment at a temperature of more than 160°C, in a device downstream of the reactor,
a.) the binder has, up to 214°C, a loss of mass of less than 1% by weight in a thermogravimetric analysis (TGA) according to DIN EN ISO 11358,
that, simultaneously or in a further continuously operated process step directly following the thermal aftertreatment,
b.) volatile constituents are removed from the binder.

4. Mass polymerization process according to Claim 1, **characterized in that**,
as a result of a granulation and without screening, a binder is obtained which
a.) contains no constituents which are larger than 3 mm and
b.) contains not more than 0.5% by weight of constituents which are smaller than 250 µm.

5. Mass polymerization process according to Claim 1,
**characterized in that** the reaction temperature is above 100°C, and that the glass transition temperature is about 2°C lower than in the case of a polymer with the same composition which was prepared by means of suspension polymerization at 80°C.

## Revendications

1. Procédé de polymérisation en substance pour la fabrication d'un liant (méth)acrylate pour formulations de vernis par polymérisation en substance continue, **caractérisé en ce que**
a.) le procédé est réalisé à une température de réaction située entre 20 °C et 250 °C, dans un malaxeur,
b.) les monomères sont ajoutés en continu dans le malaxeur,
c.) le liant est post-traité thermiquement lors d'une étape de procédé continue, suivant directement la polymérisation, dans un tube de fusion ou un échangeur de chaleur, à une température supérieure à 120 °C,
d.) le liant est ensuite dégazé dans un malaxeur de dégazage, une extrudeuse de dégazage ou un dégazeur flash à une température supérieure à 120 °C,
e.) le liant est granulé lors d'une étape de procédé continue directement ultérieure,
et **en ce que** le liant granulé présente des tailles de particule définies ayant une proportion de particules inférieures à 250 µm d'au plus 0,5 % en poids et aucune particule supérieure à 3 mm.

2. Procédé de polymérisation en substance selon la revendication 1, **caractérisé en ce que**
a.) le liant est fabriqué à partir d'un mélange de monomères, qui est constitué exclusivement de monomères et d'initiateurs, ainsi qu'éventuellement de réactifs de transfert de chaîne et d'au plus 10 % en poids de solvant,
b.) le procédé est réalisé sans ajout d'adjuvants tels que des émulsifiants, des stabilisateurs ou des démousseurs,
et c.) les polymères présentent après un post-traitement thermique lors du procédé jusqu'à 214 °C une perte de masse inférieure à 1 % en poids lors d'une thermogravimétrie (TGA) selon DIN EN ISO 11358.

3. Procédé de polymérisation en substance selon la revendication 1, **caractérisé en ce qu'**après un post-traitement thermique à une température supérieure à 160 °C dans un dispositif connecté en aval du réacteur,
a.) le liant présente jusqu'à 214 °C une perte de masse inférieure à 1 % en poids lors d'une thermogravimétrie (TGA) selon DIN EN ISO 11358, et
**en ce que**, simultanément ou lors d'une étape de procédé supplémentaire réalisée en continu, suivant directement le post-traitement thermique,
b.) des constituants volatils sont éliminés du liant.

4. Procédé de polymérisation en substance selon la revendication 1, **caractérisé en ce qu'**un liant est obtenu par une granulation et sans tamisage, qui
a.) ne contient aucun constituant supérieur à 3 mm et
b.) contient au plus 0,5 % en poids de constituants inférieurs à 250 µm.

5. Procédé de polymérisation en substance selon la revendication 1, **caractérisé en ce que** la température de réaction est supérieure à 100 °C et **en ce que** la température de transition vitreuse est inférieure de 2 °C à celle d'un polymère de composition identique, qui a été fabriqué par polymérisation en suspension à 80 °C.
